# EUROPEAN PATENT SPECIFICATION

(11) **EP 2 367 721 B1**
(45) Date of publication and mention of the grant of the patent: **27.03.2013**
(21) Application number: 09764021.3
(22) Date of filing: 02.12.2009
(51) Int. Cl.: B64F 5/00

(54) **AIRCRAFT TRANSPARENCY PROTECTION**
LUFTFAHRZEUGSCHEIBENSCHUTZ
PROTECTION DE TRANSPARENCE POUR AVION

(30) Priority: 11.12.2008 GB 0822595; 11.12.2008 EP 08275083
(43) Date of publication of application: 28.09.2011
(73) Proprietor: BAE Systems PLC, London SW1Y 5AD (GB)
(72) Inventor: LONSDALE, Michael, John, Lancashire PR4 1AX (GB); KEYBURN, Robert, James, Lancashire PR4 1AX (GB)
(74) Representative: Rawlins, Kate Cecilia
(86) International application number: PCT/GB2009/051632
(87) International publication number: WO 2010/067096

(56) References cited:
- WO-A-2008/119101
- DE-A1- 4 421 296
- GB-A- 1 354 171
- US-A- 2 372 982
- US-A- 4 842 324
- US-A- 5 644 898
- US-A1- 2006 145 008
- US-B1- 7 431 375

## Description

The present invention relates to an aircraft transparency protector particularly, but not exclusively, an aircraft transparency protector which can be installed on an aircraft transparency after manufacture in order to protect the transparency during transportation, storage and installation on the aircraft.

Although transparencies will generally be free of foreign debris, such as particles of dirt etc. when they are initially formed by the transparency manufacturer, there are numerous opportunities for dirt to collect on the transparency from the point at which the transparency leaves the manufacturer's production line, and the point at which it is ready for dispatch with the assembled aircraft. Examples of such opportunities for dirt to collect on the transparency include whilst being transported from the manufacturing site to the installation site, whilst being stored at the installation site prior to installation on the aircraft, and indeed during the process of actually installing the transparency on the aircraft. By their nature, most of these environments also tend to be relatively dirty, which worsens the situation. Furthermore, the risk of dropping, bumping or otherwise accidentally contacting the transparency is relatively high in such environments.

Transparencies are typically manufactured from biaxially stretched acrylic. The transparency manufacturer typically applies a thin-film coating to the acrylic material which remains on the transparency in order to protect it from wear and tear during its operational lifetime. If left unchecked, the factors mentioned previously result in scratch / chip damage to the transparency. This damage must be carefully polished out of the transparency, and / or the thin film coating repaired, prior to the aircraft being dispatched. This is particularly important in the field of aircraft transparencies because even very minor imperfections can be problematic during aircraft operations. Ensuring that all imperfections are removed is therefore very labour intensive. This procedure can therefore be both expensive and time consuming, which is undesirable.

It is known to temporarily cover aircraft transparencies during installation with cotton fabric protectors in an effort to minimise these problems; however, such cotton fabric protectors are relatively expensive to produce and must therefore be re-used many times before they are finally discarded. Typically, such protectors also fit the transparency poorly. As a result, the cotton fabric protectors themselves often become contaminated with dirt and can actually make the situation worse. For this reason, many fitters choose not to use such protection, with the result that the problem with damage to the transparency remains.

It is also important to ensure that any protectors which are used on the transparencies do not react with, or otherwise adversely affect, the thin film coating on the transparency.

According to a first aspect of the present invention, there is provided an aircraft transparency protector comprising a lobed blank cut from a sheet of resilient, disposable foam material, which is bendable so that when bent adjacent lobes are brought into abutment, for the blank thereby to conform closely to the shape of the transparency, wherein the resilience of the resilient material is such that when the protector is installed on the aircraft transparency, the lobes are urged against the aircraft transparency.

According to a second aspect of the present invention there is also provided a method of protecting an aircraft transparency comprising:-
cutting lobes in a sheet of resilient, disposable foam material to form a blank having a plurality of lobes;
bending the blank in order to cause the lobes to abut against one another such that the protector conforms to the shape of the transparency;
positioning the bent protector at approximately the desired location on the aircraft transparency;
releasing the protector thereby allowing it to rest on the aircraft transparency;
adjusting the position of the protector on the aircraft transparency into an adjusted position; and
securing the protector in the adjusted position on the aircraft transparency, wherein the resilience of the resilient material is such that when the protector is installed on the aircraft transparency, the lobes are urged against the aircraft transparency.

The use of resilient material, such as semi-rigid, disposable foam, in the present invention makes the protectors far less expensive to manufacture than known arrangements both because the resilient material itself is less expensive than e.g. cotton and also because the resilient material is ideally suited to less expensive manufacturing processes such as computer aided laser cutting, water jet cutting etc. This also means that the shape of the protector produced during manufacture can be easily altered to fit different shaped transparencies more accurately. In some cases the internal and external protectors (for protecting the interior and exterior of a transparency, respectively) can be shaped substantially identically. Alternatively, an external protection may need only minor modification to be suitable as an internal protection, and vice versa.

The cost saving resulting from the use of such resilient material is so considerable that it opens up the possibility of disposing of the protector after a single use. Furthermore, by its nature such resilient material is very easy to actually dispose of after use because it is relatively light, flexible and compactable etc.

The use of a resilient, foam-type material enables the protectors to conform closely to the shape of the transparency, to be in substantially complete contact over its entire surface area. This is substantially closer than the contact possible with a protector made of a fabric or similar material, the closeness of conformity of a resilient material significantly improves the protection afforded to the transparency.

Furthermore, resilient foam material is very light weight which makes installation on the transparency much more straightforward. The ease of installation is further improved by the ability of the material to retain its shape which makes it much easier to manipulate the protector into position on the transparency without the need of e.g. tie strings, such as those found on prior systems.

Although a given size of the resilient material is very lightweight it also has the great advantage of being very absorbent to forces from point loads applied thereto i.e. a given weight of foam cover will absorb impacts much more readily than e.g. a cotton cover of the same weight.

Again, such a protector also lends itself well to being stored flat in a pile ready for use on the aircraft transparencies at the installation site. This may also allow a stack of protectors to be stored in a dispenser ready for use.

A further advantage of using this material is that tests have demonstrated that it is relatively inert in the range of environments in which it is expected to be used and that the protector does not therefore react with or otherwise adversely affect the thin film coating of the transparency surface.

Further features and advantages of the invention will become apparent from the following description and claims.

Embodiments of the invention will now be described, by way of example only, with reference to the drawings, in which:-
Fig. 1 is a plan view of an internal protector according to the present invention;
Fig. 2 is a plan view of an external protector according to the present invention;
Fig. 3 is a perspective side view of the aft external protector of Fig. 2 installed on the transparency;
Fig. 4 is an end view of the aft internal protector installed in the transparency of Fig. 3;
Fig. 5 is a perspective view of the fore external protector of Fig. 2 installed on the transparency; and
Fig. 6 is a perspective view from beneath the fore internal protector of Fig. 5.

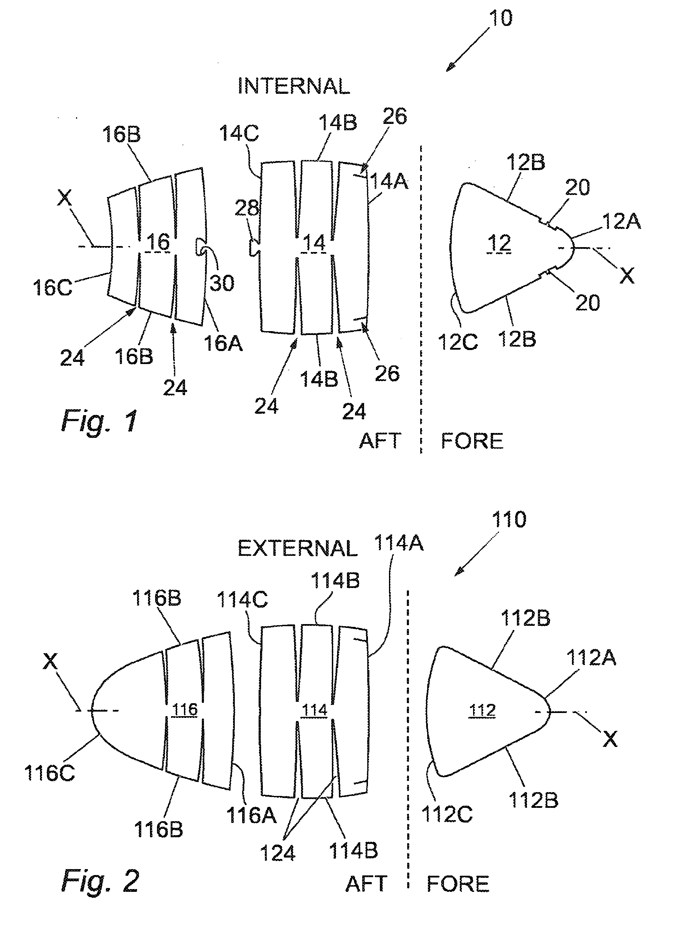

An internal aircraft transparency protector 10 (Fig. 1) and an external aircraft transparency protector 110 (Fig. 2) is provided. The dimensions and contours of the internal protector 10 are such that, when installed in the transparency, the internal protector dimensions will match those of the internal transparency. The dimensions and contours of the external protector 110 are such that, when installed on the transparency, the external protector dimensions will match those of the external transparency.

The internal protector 10 is formed from a single sheet of material which provides a protective material layer having a longitudinal axis X-X. In the present embodiment, the material is formed from a disposable foam material. Numerous forms of foam material may be used; however, an example of a suitable foam is a closed cell, cross linked, polyethylene foam material such as GalfoamTM (also known as PalFoam TM) GA400 provided by Palziv of Ein Hanatziv, D.N Bet Shean, 10805 Israel. Many variations of the constituent properties of this material may be used; however, one embodiment has the following properties:-

| **Property** | **Units** | **Values** |
|---|---|---|
| Density - Nominal | Kg/m³ | 25 |
| Density Range | Kg/m³ | 22 - 26 |
| Tensile Strength (MD) | kPa (min) | 250 |
| Tensile Strength (TD) | kPa (min) | 209 |
| Elongation at Break (MD) | % (min) | 77 |
| Elongation at Break (TD) | % (min) | 98 |
| Deflection (25%) | kPa | 34 - 42 |
| Deflection (50%) | kPa | 93 - 103 |
| Compression Set (25% 1/2hr) | % (max) | 14 |
| Compression Set (25% 24hr) | % (max) | 5.6 |

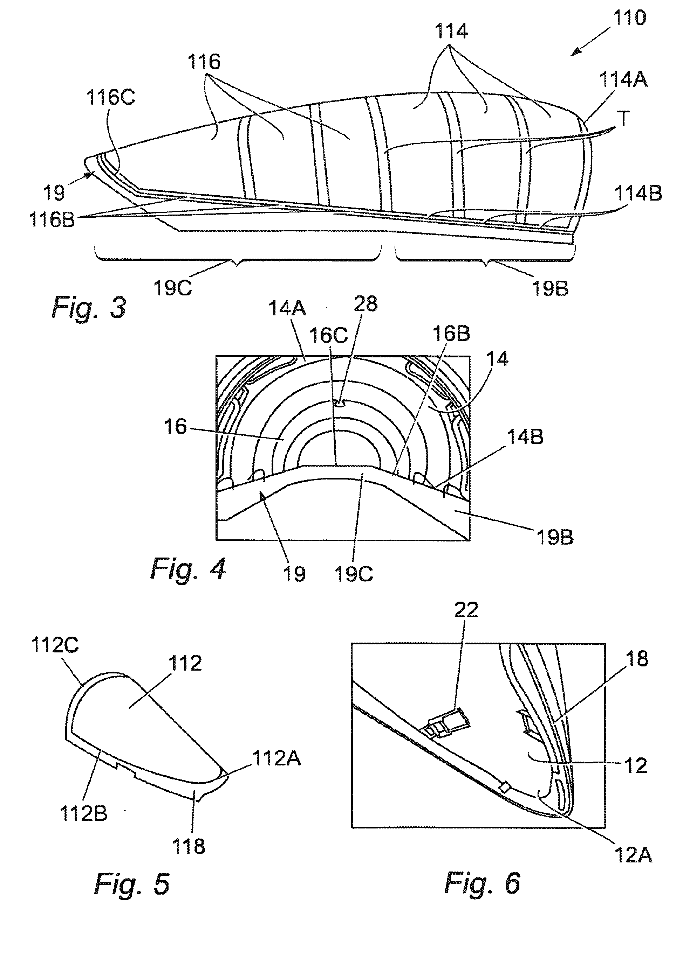

The protector 10 is divided into separate sections; a fore section 12, a central section 14 and an aft section 16. The fore section 12 has a rounded nose portion 12A, a pair of edges 12B and a curved rear edge 12C. The fore section 12 is designed to be mounted in the unhinged forward transparency (windscreen) portion shown in Fig. 5. The rounded nose portion 12A and edges 12B are shaped to fit the internal dimensions of the unhinged forward transparency frame 18 (Fig. 6). A pair of castellated cut-out portions 20 are provided between each straight edge 12B and the rounded nose portion 12A. The cut-out portions 20 are shaped to accommodate heating components such as heating terminal blocks 22 provided at the junction between the frame 18 (Fig. 6) and transparency.

The central section 14 and aft section 16 are designed to be mounted in the hinged aft transparency (canopy) section shown in Fig. 3. The central section 14 has a curved fore edge 14A, pair of curved edges 14B and curved aft edge 14C. A series of wedge shaped cuts 24 extend transversely across the central section 14 from adjacent the longitudinal axis X-X to the edges 14B in order to provide a series of three lobe segments. More or less wedge shaped cuts may be provided in order to increase or decrease the number of lobes in the section as desired. The foremost lobe has a pair of short cuts 26 at either end. The short cuts 26 are provided to allow the internal cover to be installed around components of the transparency, such as de-mist pipes which may run down the length of the transparency, parallel to the transparency frame. The curved edges 14B are shaped to fit the internal dimensions of the hinged aft transparency frame 19B (Fig. 4).

The aft section 16 has curved fore edge 16A, a pair of curved edges 16B and curved aft edge 16C. A series of wedge shaped cuts 24 extend transversely across the aft section 16 from adjacent the longitudinal axis X-X to the edges 16B in order to provide a series of three lobes. More or less wedge shaped cuts may be provided in order to increase or decrease the number of lobes in the section as desired. The curved edges 16B and curved edges 16C are shaped to fit the internal dimensions of the hinged aft transparency frame 19C.

The aft curved edge 14C, fore curved edge 16A and wedge shaped cuts 24 are all dimensioned such that when the internal protector 10 is partially folded along the longitudinal axis X-X the edges 14C, 16A and either side of the wedges shaped cuts 24 will abut against one another thereby resulting in a continuous outer surface which corresponds with the inner surface of the hinged aft aircraft transparency as shown in Fig. 4. The resilience of the protector material means that when the partially folded protector is placed inside the transparency it tends to "spring back" onto its unfolded state, thus holding itself in position.

A projection in the form of a tenon 28 is provided on aft edge 14C of central section 14 and a corresponding recess in the form of mortise 30 is provided on the fore edge 16A of aft section 16. The purpose of these features will be discussed subsequently.

With reference to Fig. 2, the external aircraft transparency protector 110 will now be described. The resilient foam material and many other features of the external protector 110 are similar to those of the internal protector 10; where appropriate, similar reference numerals are therefore used in the following description.

The external protector 110 is formed from a single sheet of material which provides a protective material layer having a longitudinal axis X-X. The external protector 110 is divided into separate sections; a fore section 112, a central section 114 and an aft section 116. The fore section 112 is designed to be mounted on the outside of the forward unhinged transparency portion shown in Fig. 5. The fore section 112 has a rounded nose portion 112A, a pair of edges 112B and an aft curved edge 112C. The rounded nose portion 112A and edges 112B are shaped to fit the outer dimensions of the forward unhinged transparency frame 18 (Fig. 5).

The central section 114 and aft section 116 are designed to be mounted on the outside of the hinged aft transparency section shown in Fig. 3. The central section 114 has a curved fore edge 114A, a pair of curved edges 114B and curved aft edge 114C. A series of wedge shaped cuts 124 extend transversely across the central section 114 from adjacent the longitudinal axis X-X to the edges 114B in order to provide a series of three lobes. More or less wedge shaped cuts may be provided in order to increase or decrease the number of lobes in the section as desired. The curved edges 114B are shaped to fit the outer dimensions of the hinged aft transparency frame 19B.

The aft section 116 has a curved fore edge 116A, a pair of curved edges 116B and a rounded tail edge 116C. A series of wedge shaped cuts 124 extend transversely across the aft section 116 from adjacent the longitudinal axis X-X to the edges 116B in order to provide a series of three lobes. More or less wedge shaped cuts may be provided in order to increase or decrease the number of lobes in the section as desired. The curved edges 116B are shaped to fit the outer dimensions of the hinged aft transparency frame 19 and the rounded tail edge 116C is shaped to fit the outer edges of the hinged aft transparency frame 19C.

The aft curved edge 114C, fore curved edge 116A and wedge shaped cuts 124 are all dimensioned such that when the external protector 110 is folded along the longitudinal axis X-X the edges 114C, 116A and either side of the wedge shaped cuts 124 will abut against one another thereby resulting in a continuous inner surface which corresponds with the outer surface of the hinged aft aircraft transparency as shown in Fig. 3. Because the protector material is resilient, the external protector needs to be held in place/shape, which is easily done using adhesive tape or the like.

It is preferable for the resilient foam protector to be manufactured in a light colour (for example, white or near white) because this maximises the visibility of any dirt particles; whether they are present on the foam protector itself or on the transparency. It is also preferable that the foam protector is at least partially translucent in order to allow light to pass through it and the transparency when the protectors are installed thereon; this makes working under the protected transparency easier.

In use, the portions of the internal and external protectors 10, 110 are provided at the installation site in their flattened configuration as shown in Figs. 1 and 2. The fitter will remove any temporary protection provided by the transparency manufacturer from the transparency and then install each portion of the protectors 10, 110 on the transparency. For example, the fitter installs section 12 in the unhinged forward transparency (Fig. 6) by partially folding it along its longitudinal axis X-X. Still holding the partially folded portion 12, the fitter then places it roughly in position within the unhinged forward aircraft transparency and then lets go. The resilience of the foam material will cause it to open back toward its flattened configuration; however, it will be prevented from doing so by the transparency inner surface. In other words, the portion 12 pops roughly into place within the transparency and will be held there by the resilience of the foam material. The fitter can then easily manoeuvre the portion 12 into better alignment such that the edges 12A and 12B align with the internal dimensions of the forward transparency frame 18.

Substantially the same process is repeated when installing each of the central portions 14 and the aft portion 16 in the hinged aft transparency (Fig. 4). In this regard, when the aft portion 16 is put in place in the hinged aft transparency, the fitter can manoeuvre it into alignment with the central portion 14 such that the tenon 28 is received within the recess 30 thereby providing a dovetailed joint which secures the central portion 14 to the aft portion 16. Although described in relation to the portions 14 and 16, clearly, the dovetailed joint described could also be provided between other sections of the internal and / or external cover if desired.

Once in position within the aft hinged transparency frame 19 any joins between the lobes and or the individual sections 14 and 16 may be made flush by taping over them with PVC or similar tape.

To install the external protector 110, the fitter will remove any temporary protection provided by the transparency manufacturer from the transparency and then install each portion of the external protector 110 onto the transparency exterior. For example, the fitter installs section 112 by placing it on the forward unhinged transparency exterior, folding it around the exterior transparency profile and then taping its edges 112B and 112A to the transparency frame 18. Substantially the same process is repeated when installing each of the central portions 114 and the aft portion 116 in the hinged aft transparency (Fig. 3).

Once in position on the exterior of the transparency any joins between the lobes and or the individual sections 114 and 116 may be made flush by taping them over with PVC or similar tape T, as shown in Fig. 3.

Alternatively, the foam material of the external cover 100 may be provided in a partially closed configuration where the radius of curvature of each section is less than that of the transparency exterior on which it is to be installed. With such an arrangement each section is first partially opened out by the fitter. Still holding the opened out portion, the fitter then places it roughly in position over the appropriate portion of the aircraft transparency and then lets go. The resilience of the foam material will cause it to close around the outside of the transparency toward its previous, partially closed, configuration; however, it will be prevented from doing so by the external surface of the transparency; in other words, it snaps onto the outside of the transparency, roughly in place, and will be held there by the resilience of the foam material. The fitter can then easily manoeuvre each portion into better alignment with the outer edges of the transparency frame.

It can be seen from the above description that the invention provides a very cost effective and efficient way of protecting an aircraft transparency. This reduces the number of man hours spent polishing out any scratches in the transparency before the aircraft is dispatched.

Furthermore, the use of a resilient material such as foam in such a protector has further significant benefits which include, but are not limited to :-
- Surprisingly good protection from accidental bumps and knocks to the transparency during installation on the aircraft due to the inherent ability of foam material to absorb such impacts;
- Very lightweight and easy to fit, even with one hand when the other hand is used to position etc. This means that individual fitters are far more likely to actually use the protector;
- Very low material costs. This means that the cost of producing the protector is low enough to allow the protector to be used only once before being discarded. This has the major advantage of removing any possibility of dirt being transferred to the transparency by the protector itself;
- No accurate alignment of the protector is required in the first instance; it can simply be placed roughly into position on the transparency and then repositioned as necessary;
- Since the foam is light and non-bulky it can be left on the transparency once it has been installed on the aircraft right up to the point when engine ground runs commence. It therefore protects the transparency for a much longer duration than previous arrangements;
- The material is non-hazardous which simplifies handling procedures;
- The material properties make it ideally suited to alternative manufacturing processes, such as water-jet cutting; which is a relatively quick, accurate and inexpensive manufacturing method. This further increases the economic benefits of the invention.
- Although the invention described above has separate and slightly differently-shaped internal and external protectors, in practice an external protector can be produced to fit the exterior of a transparency, and this protector can be produced to fit the exterior of a transparency, and this protector can be modified quite easily so as to fit as an internal transparency protector (thus overcoming difficulties in fitting internal protectors, and being advantageously inexpensive and simple).

Modifications and improvements may be made to the foregoing, without departing from the scope of the invention, for example:-

Although described with reference to a particular transparency shape, the present invention is not limited to such a shape of transparency. Indeed, the invention may usefully be applied to other shapes of aircraft transparencies with minimal modification being required.

## Claims

1. An aircraft transparency protector (10, 110) comprising a lobed blank cut from a sheet of resilient, disposable foam material, which is bendable, so that when bent adjacent lobes are brought into abutment, for the blank thereby to conform to the shape of the transparency, wherein the resilience of the resilient material is such that when the protector (10. 110) is installed on the aircraft transparency, the lobes are urged against the aircraft transparency.

2. An aircraft transparency protector (10, 110) according to Claim 1, wherein the lobes are provided by a plurality of wedge shaped cuts (24) extending transversely across the protector (10, 110).

3. An aircraft transparency protector (10, 110) according to Claim 1 or 2, wherein a plurality of divisions are provided in the resilient material such that the protector comprises a plurality of separate sections (12, 14, 16,) (112, 114, 116) one or more of which may be installed in one of a fore or aft aircraft transparency.

4. An aircraft transparency protector (10, 110) according to Claim 3, wherein at least one of the plurality of sections is provided with a projection (28) and the other is provided with a recess (30) for receiving the projection (28) such that when the projection (28) is received within the recess the sections are removably attached to one another.

5. An aircraft transparency protector (10, 110) according to Claim 4, wherein the projection (28) comprises a tenon member and the recess (30) comprises a mortise arrangement which, when secured to one another, form a dovetailed joint.

6. An aircraft transparency protector (10, 110) according to any preceding claim, wherein the resilient material is coloured in order to maximise the visibility of foreign debris either on the transparency and / or on the protector (10, 110).

7. An aircraft transparency protector (10, 110) according to any preceding claim, wherein the resilient material is at least partially translucent.

8. An aircraft transparency protector (10, 110) according to any preceding claim wherein in use one surface of the protector (10, 110) is in substantially continuous contact with the adjacent surface of the aircraft transparency.

9. A method of protecting an aircraft transparency comprising:
cutting lobes in a sheet of resilient, disposable foam material to form a protector (10, 110) configured as a blank having a plurality of lobes;
bending the blank in order to cause the lobes to abut against one another such that the protector (10, 110) conforms to the shape of the transparency;
positioning the bent protector (10, 110) at approximately the desired location on the aircraft transparency;
releasing the protector (10, 110) thereby allowing it to rest on the aircraft transparency;
adjusting the position of the protector (10, 110) on the aircraft transparency into an adjusted position; and
securing the protector (10, 110) in the adjusted position on the aircraft transparency, wherein the resilience of the resilient material is such that when the protector is installed on the aircraft transparency, the lobes are urged against the aircraft transparency.

10. A method according to Claim 9, wherein when the partially folded protector is placed inside the transparency it tends to spring back onto its unfolded state, thus holding itself in position.

11. A method according to any of Claims 9 to 10, further comprising providing a plurality of divisions in the resilient material in order to separate the protector (10, 110) into discrete sections (12, 14, 16) (112, 114, 116), one or more of which may be installed in one of a fore or aft aircraft transparency, providing a tenon member (28) and a mortise arrangement (30) on at least one of the discrete sections and securing the tenon member in the mortise arrangement in order to form a dovetailed joint which secures the sections to one another.

## Patentansprüche

1. Flugzeugkabinenfenster-Schutzeinrichtung (10, 110), die einen mit Keulen versehenen Rohling umfasst, der aus einer Lage aus elastischem, wegwerfbarem Schaummaterial ausgeschnitten ist und biegsam ist, so dass dann, wenn gebogene benachbarte Keulen in gegenseitigen Anschlag gebracht werden, der Rohling mit der Form das Kabinenfensters übereinstimmt, wobei die Nachgiebigkeit des elastischen Materials derart ist, dass dann, wenn die Schutzeinrichtung (10, 110) auf dem Flugzeugkabinenfenster installiert ist, die Keulen gegen das Flugzeugkabinenfenster gedrängt werden.

2. Flugzeugkabinenfenster-Schutzeinrichtung (10, 110) nach Anspruch 1, wobei die Keulen durch mehrere keilförmige Ausschnitte (24) gebildet sind, die sich quer über die Schutzeinrichtung (10, 110) erstrecken.

3. Flugzeugkabinenfenster-Schutzeinrichtung (10, 110) nach Anspruch 1 oder 2, wobei mehrere Unterteilungen in dem elastischen Material vorgesehen sind, so dass die Schutzeinrichtung mehrere getrennte Abschnitte (12, 14, 16) (112, 114, 116) umfasst, wovon einer oder mehrere in einem vorderen oder hinteren Flugzeugkabinenfenster installiert sein können.

4. Flugzeugkabinenfenster-Schutzeinrichtung (10, 110) nach Anspruch 3, wobei wenigstens einer der mehreren Abschnitte mit einem Vorsprung (28) versehen ist und der andere mit einer Aussparung (30) zum Aufnehmen des Vorsprungs (28) versehen ist, so dass dann, wenn der Vorsprung (28) in der Aussparung aufgenommen ist, die Abschnitte lösbar aneinander befestigt sind.

5. Flugzeugkabinenfenster-Schutzeinrichtung (10, 110) nach Anspruch 4, wobei der Vorsprung (28) ein Zapfenelement umfasst und die Aussparung (30) eine Zapfenlochanordnung umfasst, die, wenn sie aneinander befestigt sind, eine Schwalbenschwanzverbindung bilden.

6. Flugzeugkabinenfenster-Schutzeinrichtung (10, 110) nach einem vorhergehenden Anspruch, wobei das elastische Material gefärbt ist, um die Sichtbarkeit von Fremdstoffen entweder auf dem Kabinenfenster und/oder auf der Schutzeinrichtung (10, 110) maximal zu machen.

7. Flugzeugkabinenfenster-Schutzeinrichtung (10, 110) nach einem vorhergehenden Anspruch, wobei das elastische Material wenigstens teilweise lichtdurchlässig ist.

8. Flugzeugkabinenfenster-Schutzeinrichtung (10, 110) nach einem vorhergehenden Anspruch, wobei im Gebrauch eine Oberfläche der Schutzeinrichtung (10, 110) in einem im Wesentlichen ununterbrochenen Kontakt mit der benachbarten Oberfläche des Flugzeugkabinenfensters ist.

9. Verfahren zum Schützen eines Flugzeugkabinenfensters, das Folgendes umfasst:
Ausschneiden von Keulen aus einer Lage aus elastischem, wegwerfbarem Schaummaterial, um eine Schutzeinrichtung (10, 110) zu bilden, die als ein Rohling mit mehreren Keulen konfiguriert ist;
Biegen des Rohlings, um die Keulen zu veranlassen, aneinander anzuliegen, so dass die Schutzeinrichtung (10, 110) an die Form des Kabinenfensters angepasst ist;
Positionieren der gebogenen Schutzeinrichtung (10, 110) ungefähr an dem gewünschten Ort auf dem Flugzeugkabinenfenster;
Freigeben der Schutzeinrichtung (10, 110), um ihr dadurch zu ermöglichen, auf dem Flugzeugkabinenfenster zu ruhen;
Einstellen der Position der Schutzeinrichtung (10, 110) auf dem Flugzeugkabinenfenster auf eine eingestellte Position; und
Befestigen der Schutzeinrichtung (10, 110) an der eingestellten Position auf dem Flugzeugkabinenfenster, wobei die Nachgiebigkeit des elastischen Materials derart ist, dass dann, wenn die Schutzeinrichtung auf dem Flugzeugkabinenfenster installiert ist, die Keulen gegen das Flugzeugkabinenfenster gedrängt werden.

10. Verfahren nach Anspruch 9, wobei dann, wenn die teilweise gefaltete Schutzeinrichtung in dem Kabinenfenster angeordnet ist, sie bestrebt ist, in den nicht gefalteten Zustand zurückzuspringen, so dass sie von selbst an ihrer Position hält.

11. Verfahren nach einem der Ansprüche 9 bis 10, das ferner das Vorsehen mehrerer Unterteilungen in dem elastischen Material, um die Schutzeinrichtung (10, 110) in diskrete Abschnitte (12, 14, 16) (112, 114, 116) zu trennen, wovon einer oder mehrere in einem vorderen oder einem hinteren Flugzeugkabinenfenster installiert werden können, das Vorsehen eines Zapfenelements (28) und einer Zapfenlochanordnung (30) auf wenigstens einem der diskreten Abschnitte und das Befestigen des Zapfenelements in der Zapfenlochanordnung, um eine Schwalbenschwanzverbindung zu bilden, die die Abschnitte aneinander befestigt, umfasst.

## Revendications

1. Protecteur de transparence (10, 110) pour avion comprenant une ébauche lobée découpée hors d'une feuille de matériau cellulaire jetable élastique, qui est flexible, de telle manière que, une fois courbée, des lobes adjacents soient placés bout à bout, afin que l'ébauche puisse ainsi se conformer à la forme de la transparence, dans lequel l'élasticité du matériau élastique est telle que, lorsque le protecteur (10, 110) est installé sur la transparence d'un avion, les lobes soient poussés contre la transparence de l'avion.

2. Protecteur de transparence (10, 110) pour avion selon la revendication 1, dans lequel les lobes sont créés par une pluralité de découpes en forme de coins (24) s'étendant transversalement en travers du protecteur (10, 110).

3. Protecteur de transparence (10, 110) pour avion selon la revendication 1 ou 2, dans lequel il est prévu une pluralité de divisions dans le matériau élastique de telle manière que le protecteur comprenne une pluralité de sections séparées (12, 14, 16), (112, 114, 116), dont une ou plusieurs peut/peuvent être installée(s) dans une transparence avant ou arrière d'un avion.

4. Protecteur de transparence (10, 110) pour avion selon la revendication 3, dans lequel au moins une de la pluralité de sections est munie d'une saillie (28) et l'autre est munie d'un creux (30) destiné à recevoir la saillie (28) de telle manière que, lorsque la saillie (28) est logée à l'intérieur du creux, les sections soient attachées l'une à l'autre de façon amovible.

5. Protecteur de transparence (10, 110) pour avion selon la revendication 4, dans lequel la saillie (28) comprend un élément de tenon et le creux (30) comprend un agencement de mortaise qui, lorsqu'ils sont fixés l'un à l'autre, forment un assemblage à queue d'aronde.

6. Protecteur de transparence (10, 110) pour avion selon l'une quelconque des revendications précédentes, dans lequel le matériau élastique est coloré afin de maximiser la visibilité de débris extérieurs soit sur la transparence soit aussi sur le protecteur (10, 110).

7. Protecteur de transparence (10, 110) pour avion selon l'une quelconque des revendications précédentes, dans lequel le matériau élastique est au moins partiellement translucide.

8. Protecteur de transparence (10, 110) pour avion selon l'une quelconque des revendications précédentes, dans lequel, en cours d'utilisation, une surface du protecteur (10, 110) est en contact substantiellement continu avec la surface adjacente de la transparence d'avion.

9. Procédé de protection d'une transparence d'avion, comprenant les étapes suivantes:
découper des lobes dans un matériau cellulaire jetable élastique pour former un protecteur (10, 110) configuré comme une ébauche comportant une pluralité de lobes;
courber l'ébauche afin d'amener les lobes à se placer bout à bout les uns contre les autres de telle manière que le protecteur (10, 110) se conforme à la forme de la transparence;
positionner le protecteur courbé (10, 110) approximativement à l'emplacement désiré sur la transparence d'avion;
relâcher le protecteur (10, 110), lui permettant ainsi de reposer sur la transparence d'avion;
ajuster la position du protecteur (10, 110) sur la transparence d'avion dans une position ajustée; et
fixer le protecteur (10, 110) dans la position ajustée sur la transparence d'avion, dans lequel l'élasticité du matériau élastique est telle que, lorsque le protecteur est installé sur la transparence d'avion, les lobes soient poussés contre la transparence d'avion.

10. Procédé selon la revendication 9, dans lequel, lorsque le protecteur partiellement plié est placé à l'intérieur de la transparence, il tend à se détendre pour reprendre son état non plié, se maintenant ainsi lui-même en position.

11. Procédé selon l'une quelconque des revendications 9 à 10, comprenant en outre les étapes de créer une pluralité de divisions dans le matériau élastique afin de séparer le protecteur (10, 110) en sections discrètes (12, 14, 16), (112, 114, 116), dont une ou plusieurs peut/peuvent être installée(s) dans une transparence avant ou arrière d'un avion, de procurer un élément de tenon (28) et un agencement de mortaise (30) sur au moins une des sections discrètes et de fixer l'élément de tenon dans l'agencement de mortaise afin de former un assemblage à queue d'aronde qui fixe les sections l'une à l'autre.
